# EUROPEAN PATENT SPECIFICATION

(11) **EP 1 990 950 B1**
(45) Date of publication and mention of the grant of the patent: **03.07.2013**
(21) Application number: 07720834.6
(22) Date of filing: 18.04.2007
(51) Int. Cl.: H04L 12/26

(54) **A MANAGEMENT METHOD FOR PASSIVE OPTICAL NETWORK TERMINAL AND SYSTEM THEREOF**
VERWALTUNGSVERFAHREN FÜR EIN ENDGERÄT UND SYSTEM EINES PASSIVEN OPTISCHEN NETZWERKS
PROCÉDÉ DE GESTION D'UN TERMINAL DE RÉSEAU OPTIQUE PASSIF ET SYSTÈME ASSOCIÉ

(30) Priority: 21.04.2006 CN 200610060449
(43) Date of publication of application: 12.11.2008
(73) Proprietor: Huawei Technologies Co., Ltd., Longgang District, Shenzhen Guangdong 518129 (CN)
(72) Inventor: LI, Hongguang, Guangdong 518129 (CN)
(74) Representative: Thun, Clemens
(86) International application number: PCT/CN2007/001261
(87) International publication number: WO 2007/121666

(56) References cited:
- WO-A1-2006/003164
- CN-A- 1 496 064
- CN-A- 1 536 822
- US-A1- 2003 041 137
- US-A1- 2003 137 982
- US-A1- 2004 196 797
- US-A1- 2005 135 365
- US-A1- 2005 158 048
- US-A1- 2005 163 504

## Description

### Field of the Invention

The present invention relates to passive optical network (PON) technologies, and in particular, to a method and system for managing PON terminals.

### Background of the Invention

At present, the broadband access technology includes two types: copper wire access technology such as digital subscriber line (xDSL) technology and optical access technology. An access network based on the optical access technology is called an optical access network (OAN).

The PON technology is an optical access technology for point-to-multipoint transfer. No matter what a PON terminal serves as, an extended node of the access network at the customer premises or a carrier of the digital residential multimedia telecom service, the efficiency of managing PON terminals is an important technical issue in the fiber-optic networks.

PON terminals can be managed through a network management solution in the prior art. The prior art provides two types of network management systems (NMSs): direct NMS and indirect NMS.

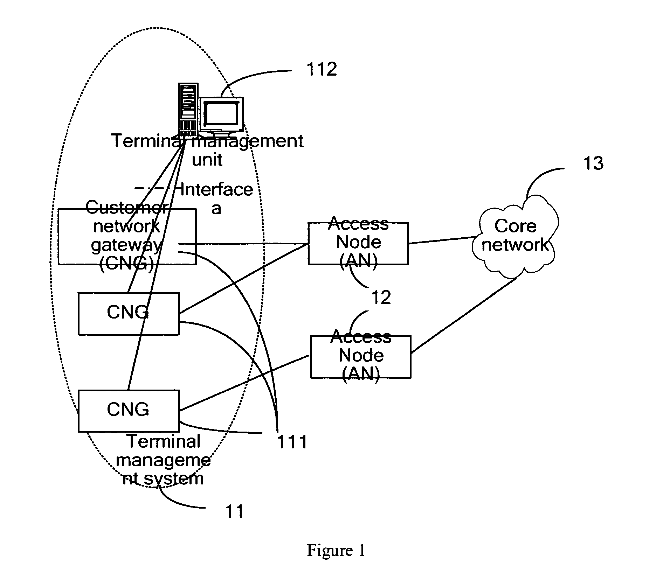

Figure 1 shows the composition of a direct NMS that manages terminals. A direct NMS includes two independent management domains: a terminal management system 11 and an access node (AN) management system (not shown in Figure 1). The terminal management system 11 is connected to a core network 13 through an access node (AN) 12. The terminal management system 11 manages the customer network gateway (CNG, equivalent to customer premises equipment (CPE), depicted as "terminal", hereinafter the same). The management includes collecting terminal alarm data, analyzing and processing the collected alarm data, querying and configuring terminal parameters, and other operations on the terminal such as software/hardware upgrade. The terminal management system 11 includes a terminal 111 and a terminal management unit 112. The terminal 111 interacts with the terminal management unit 112 through interface a.

Specifically in a PON system, the direct NMS includes two independent management domains: a PON terminal (ONT) management system and an optical line terminal (OLT, a fiber access node of Central Office) management system. The PON terminal management system interacts with a PON terminal such as an optical network unit/terminal (ONU/T, a fiber access terminal) directly through interface a. ONT and ONU are collectively called "ONT" herein.

An OLT management system includes an OLT manager and OLTs. The OLT manager manages the OLTs through interface b. In the direct management solution, the terminal management system is oriented to terminals and the AN management system is oriented to access nodes, both being independent without any interface for connection.

In the direct management solution, the terminal management system generally needs to manage plenty of terminals (a single system manages more than 50,000 terminals). Moreover, terminals are physically deployed in a wide range rather than in an easily manageable equipment room, or even deployed at the home of a user, so that the operator can not always exercise control on terminals reliably. To obtain the correct state of each terminal, the terminal management system relies on the handshake mechanism between terminals. Due to large quantities of terminals, the handshake mechanism brings heavy load onto the terminal management system, and reduces the capacity and the performance of the system. Moreover, a terminal may be deployed in a private network, and a management protocol is generally based on IP. Consequently, even if the communication link is normal, the IP path between the terminals and the terminal management system may be blocked, which makes the terminal management system unable to judge the terminal state accurately and impedes troubleshooting.

Therefore, when managing terminals, a direct NMS has the following weaknesses:
(1) Interface a between the terminal management unit and the terminal is based on IP, so the management of terminals is largely affected by the quality of the bearer network.
(2) Due to the cost factor, the capacity of the terminal management system is largely restricted.
(3) It is difficult to collect the alarm and performance data of the terminals timely and effectively, and it is easy to cause performance bottlenecks of the terminal management system.

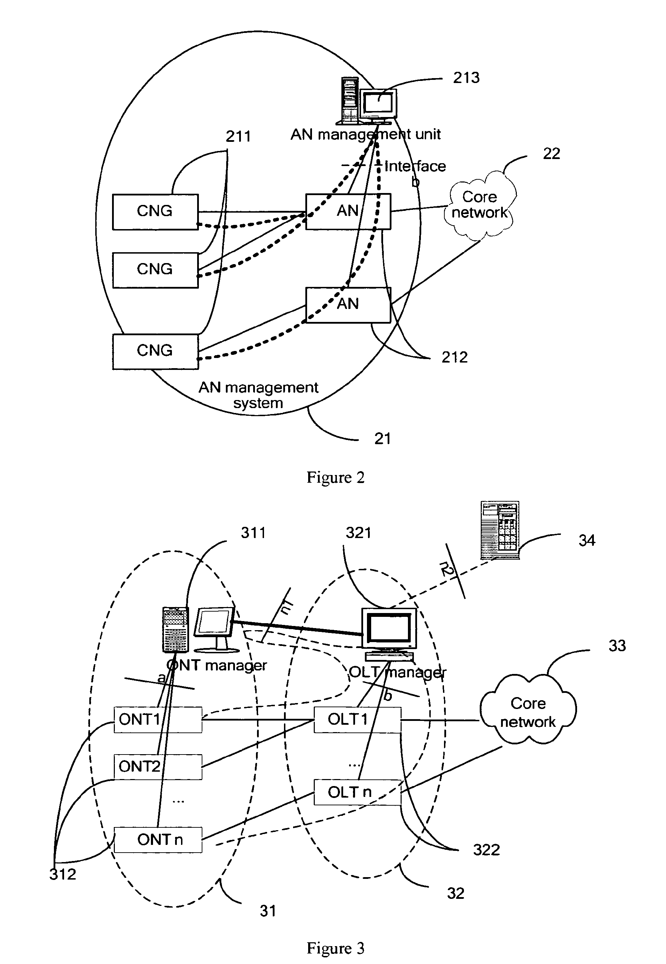

As shown in Figure 2, an indirect NMS for managing terminals consists of an AN management system 21 and a core network 22. The AN management system 21 further includes: a terminal 211, an AN 212, and an AN management unit 213. The indirect NMS does not contain an independent terminal management system, but manages a terminal as a virtual port of an AN.

Specifically in a PON system, the OLT manager manages an ONT as a virtual port of an OLT.

An indirect NMS has the following weaknesses:
(1) It is unable to manage a terminal in a differentiated way when the terminal is managed as a virtual port of an AN.
(2) The terminal management capability of the AN management system is limited.
(3) All traffic deriving from terminal management needs to be transferred by an AN, which brings heavy processing overhead to the AN. Likewise, the AN management unit not only needs to perform normal AN management functions, but also needs to configure terminals, collect alarm/performance data, and perform network-wide statistic analysis on the terminals. Therefore, an indirect NMS imposes stringent requirements on the performance of the AN management unit and the AN.

WO2006/003164 discloses a method for obtaining an optical power level in a PON. US2005/135365 discloses to a method for supporting a multicast service in an EPON. US2005/158048 discloses to a method for managing link status between the OLT and the ONUs. US2005/163504 discloses to a method for providing the ability to send an OLT's system time to an ONT. US2004/196797 discloses a method for routing a packet using a home network equipment as a home agent in a mobile Inter Protocol version 6 (IPv6). US2003/041137 discloses a home gateway apparatus that can flexibly perform a control of an acquisition and transmission of a management information between a plurality of intra-home terminal devices and a plurality of manager terminals on a network. However, the techniques as provided in these documents fail to solve the technical problem as mentioned above.

### Summary of the Invention

An embodiment of the present invention provides a method and system for managing PON terminals to overcome the inefficiency of managing PON terminals in the prior art.

A method for managing PON terminals provided in an embodiment of the present invention includes:
managing, by a PON terminal manager, information in an IP layer and upper layers of a PON terminal directly; and
managing, by a PON terminal manager, information in a link layer and a physical layer of the PON terminal indirectly through an OLT manager;
the PON terminal manager is configured for managing the PON terminal though a first IP-based interface, the OLT manager is configured for managing an OLT through a second IP-based interface; the PON terminal manager is connected to the OLT manager though a third interface; ONT state monitoring and test functions of the physical layer and the link layer are performed through the third interface between the OLT manager and the PON terminal manager.

A system for managing PON terminals provided in an embodiment of the present invention includes: a PON terminal, a PON terminal manager, an OLT and an OLT manager.

The PON terminal manager is adapted to manage information in an IP layer and upper layers of the PON terminal directly, and manage information in a link layer and a physical layer of the PON terminal indirectly.

The PON terminal manager is configured for managing the PON terminal though a first IP-based interface, the OLT manager is configured for managing an OLT through a second IP-based interface. The OLT manager provides a third interface for the PON terminal manager to indirectly manage the PON terminal, and directly controls the interaction between the OLT and the PON terminal. ONT state monitoring and test functions of the physical layer and the link layer are performed through the third interface between the OLT manager and the PON terminal manager.

The embodiments of the present invention use a PON terminal (ONT) management system and an OLT management system to manage PON terminals concurrently. The PON terminal manager interacts with each PON terminal directly to manage the services in the layers above the link layer (IP layer and upper layers); the ONT manager manages PON terminals in the physical layer and the link layer through the functions provided by the OLT management system. The present invention combines the merits of the direct management mode and the indirect management mode through a technical solution based on an L2 link protocol between OLT and ONT, and realizes efficient remote terminal maintenance and management.

### Brief Description of the Drawings

Figure 1 shows a direct NMS in the prior art;
Figure 2 shows an indirect NMS in the prior art;
Figure 3 shows the composition of a system that manages PON terminals in a hybrid way according to an embodiment of the present invention;
Figure 4 is a flowchart of the method for hybrid management of PON terminals according to an embodiment of the present invention;
Figure 5 is a flowchart of the OLT manager obtaining the ONT state information according to an embodiment of the present invention;
Figure 6 is a flowchart of the ONT manager testing an ONT according to an embodiment of the present invention; and
Figure 7 is a flowchart of the ONT manager resetting/upgrading an ONT according to an embodiment of the present invention.

### Detailed Description of the Invention

The embodiments of the present invention use a PON terminal (ONT) management system and an OLT management system to manage PON terminals concurrently. The PON terminal manager interacts with each PON terminal directly through an IP-based management protocol to manage the services in the layers above the link layer, without assistance of the OLT management system; the ONT management system implements the operations about L2 link state monitoring, link diagnosis, loop troubleshooting and recovery through the L2 link protocol between OLT and ONT by using the functions provided by the OLT management system.

The present invention is hereinafter described in detail with reference to embodiments and accompanying drawings.

As shown in Figure 3, the system that manages PON terminals in a hybrid way in an embodiment of the present invention includes an ONT management domain 31 and an OLT management domain 32, where the OLT management domain 32 is connected to a core network 33. Specifically, a PON system includes: a PON terminal manager and the terminals managed by it (PON terminals include ONTs and ONUs, which are collectively called "ONTs" herein; in this embodiment, the PON terminal manager is ONT manager 311, and the PON terminal is ONT 312), an OLT 322 and an OLT manager 321, where the ONT manager 311 is connected to the OLT manager 321 through an n1 interface.

The southbound interface "a" of the PON terminal (ONT) management system and the southbound interface "b" of the OLT management system are IP-based paths. The management protocol may be Simple Network Management Protocol (SNMP) or a derivative of the Extensible Markup Language (XML); the protocol type of the n1 interface is not limited, and may be a derivative of XML.

The ONT manager 311 manages ONT 1, ONT 2, ..., and ONT n (numbered "312" in the figure) through interface a. The ONT manager 311 interacts with the ONT 312 directly to manage the services in the IP layer and upper layers.

The OLT manager 321 manages OLT 1, OLT 2, ..., and OLT n (numbered "322" in the figure) through interface b. The ONT state monitoring (state data acquisition) and some of the test functions of the physical layer and link layer are performed through the n1 interface between the OLT manager 321 and the ONT manager 311. Specifically, the OLT manager 321 is an agent, and implements specific equipment operations through an ONT management and control interface (OMCI) path between OLT 322 and ONT 312. The OLT management system performs management functions on the pure physical layer or pure link layer, and provides an interface for the ONT management system. Through the n2 interface shown in Figure 3, the OLT management system may also provide such functions for other application systems (for example, server 34).

To implement the foregoing hybrid management, the ONT 312, the OLT manager 321 and the ONT manager 311 maymeet the following requirements:

The ONT data model may include the following parameters:
Unique physical ID: The recommended format of the ID is: OUI-serial number (OUI stands for organizationally unique identifier). The serial number of the terminal must be unique, which may be ensured by the manufacturer in the process of manufacturing the terminal;
Terminal type: A terminal type may include, not limited to, OUI and equipment type; and
Terminal state: The terminal state indicates the current state of the terminal; format: status, enumeration type. Possible values include, but not limited to:
   online;
   offline;
   linkfailure and
   testing.

If the link fails, the terminal state should be set to "linkfailure" rather than "offline" to be different from the case that the terminal goes offline actively. After discovering the abnormal offline state of the terminal, the OLT 322 can detect the link to reflect the terminal state accurately.

Functional requirements on the OLT manager 321 are as follows:

The OLT manager may implement the n1 interface and meet the functional requirements of the n1 interface: send the diagnosis test and terminal reset requests from the ONT management system interface to the corresponding OLT 322, and forward the terminal response messages from the OLT 322 to the ONT management system. The OLT 322 may only transmit commands to the terminal transparently, and transmit transparently the response messages of the terminal to the ONT management system to simplify the requirements on the OLT 322.

Functional requirements on the ONT manager 311 are as follows:
(1) The ONT manager may implement the n1 interface and meet the functional requirements of the n1 interface.
(2) When the information about a managed OLT network element is added, the ONT manager completes the corresponding OLT identifier information, so that the specified OLT 322 can be found in the OLT management system and that the terminal state information can be obtained from the OLT 322.
(3) The ONT manager 311 can obtain OLT information from the n1 interface, including OLT identifier and geographic location. In this way, the terminal data can be obtained from the OLT management system conveniently and the accurate geographic location of the terminal can be determined.
(4) The ONT management system may is compatible with the direct management mode.

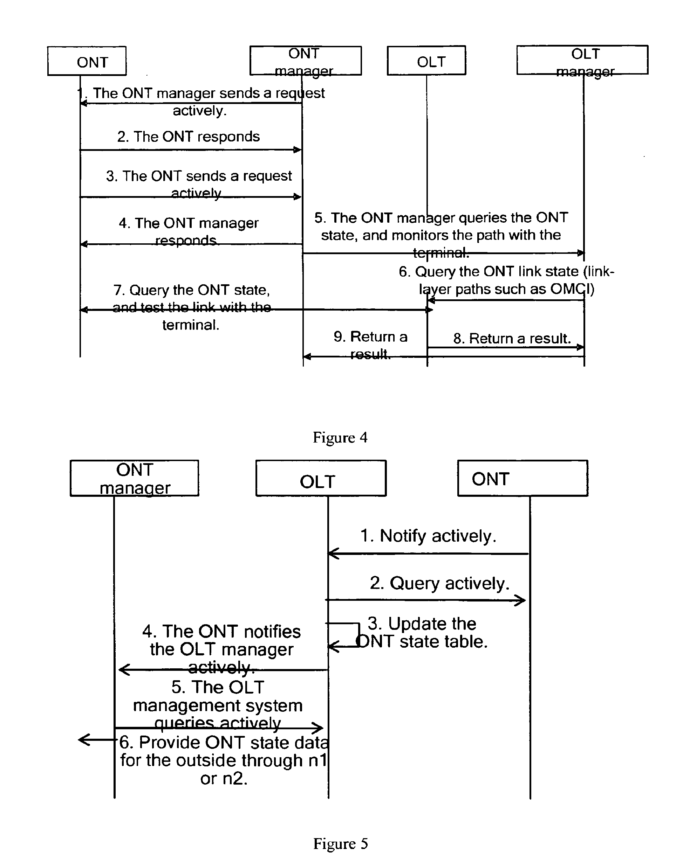

Figure 4 is a flowchart of the method for managing PON terminals in a hybrid way according to an embodiment of the present invention.

Steps 1-4 of the flowchart illustrate the message flow of direct interaction between the ONT and the ONT manager (direct management part). The ONT manager interacts with the ONT directly to manage the services in the IP layer and upper layers, without assistance of the OLT management system. The specific process is as follows:
1. The ONT manager sends a request for operating the ONT actively; and
2. The ONT responds to the ONT manager and returns an operation result.
   or,
3. The ONT sends a request for interacting with the ONT manager actively, for example, reporting an event; and
4. The ONT manager returns a result of processing the ONT request to the ONT.

In steps 5-9, the ONT management system performs the operations about L2 link state monitoring, link diagnosis , loop troubleshooting and recovery through the L2 link protocol between OLT and ONT by using the functions provided by the OLT management system. The specific process is as follows:
5. When the ONT management system performs functions related to the L2 link (ONT state monitoring, link detection, troubleshooting, and equipment recovery), the ONT management system sends an operation request to the OLT manager;
6. According to the request, the OLT manager determines which OLT is connected to the ONT to be operated, and then sends the request to the OLT through a management path between the OLT and the OLT manager; if the ONT management system only queries the ONT state and the ONT state is already saved in the OLT manager and is synchronized in real time, the OLT manager returns the ONT state without performing the following steps;
7. If necessary, the OLT converts the request into an L2 link protocol message and sends it to the ONT. The specific conversion is related to the implementation of the L2 protocol (the OLT returns the information to the OLT manager directly without interacting with the ONT if the purpose of the request is only to obtain the data such as link state and the OLT reserves real-time information about the link between OLT and ONT);
8. The OLT returns the operation result to the OLT manager; and
9. The OLT manager returns the operation result to the ONT manager through the n1 interface.

The ONT manager interacts with the ONT directly to configure the ONT parameters and query information in the layers above the link layer.

Figure 5 is a flowchart of the OLT manager synchronizing the state information of the ONT.

The OLT obtains the ONT state information in two ways: the ONT notifies the OLT actively; or the OLT queries the ONT about the state information, as shown in step (1) and step (2) in Figure 5 respectively. The notification messages actively sent by the ONT include ONU serial number message (Serial_Number_ONU message) sent after power-on of the ONT, and the power-off process indication message sent in the normal power-off process such as Dying_Gasp message (in a gigabit passive optical network, GPON) and R-INH message (in a broadband passive optical network, BPON). The active query of the OLT is not limited to setting a query command separately. Instead, the OLT can judge the ONT state according to the conditions of the ONT after the OLT sends a request message to the ONT. Once the OLT determines the ONT state, the OLT can update its own ONT state table.

Likewise, the OLT manager obtains the ONT state information from the OLT in two ways: the OLT notifies the OLT manager actively; or the OLT manager queries the OLT about the state information, as shown in step (4) and step (5) in Figure 5 respectively. In practice, it is common that the OLT reports the state information actively. In this way, the OLT can report only the changed ONT state information, and can report the state information of multiple ONTs at a time, thus reducing the frequency of interacting with the OLT manager and improving the performance and efficiency. Moreover, in certain cases, the OLT manager can query the state information of one or more ONTs connected to an OLT actively.

State information defined as the state information provided by the OLT management system through n1 or n2 includes, but not limited to, the following contents:

| **Parameter** | **Description** | **Format** | |
|---|---|---|---|
| Terminal ID | Uniquely identifies a terminal. | Recommended format: OUI-serial number. The manufacturer ensures uniqueness of the serial number of the manufactured terminals. | |
| Terminal line ID | Identifies the terminal line. | Composition of a terminal line ID includes but not limited to: an OLT ID, location (frame/slot/port) of the OLT connected to the terminal, and the current virtual ID of the terminal. The recommended format is: | |
| | | OLT-ID/frame/slot/subslot/port/*virtual ID. (*virtual ID: an identifier that identifies a terminal when multiple ONTs are connected to the same physical port of the same OLT. The virtual ID of a point-to-multiport PON access network is LLID (logical link ID). In the case that an ONT corresponds to an OLT port exactly, the recommended virtual ID is "0".) | |
| Terminal type | Indicates the model of terminal equipment. | Terminal types include but not limited to: OUI, and equipment type. | |
| OUI | Identifies the manufacturer of the terminal. | Format: OUI. If the terminal ID does not include the OUI, the OUI is recommended; otherwise, the OUI is optional. | |
| Terminal status | Indicates the current status of the terminal. | Format: status, enumeration type. Possible values include, but not limited to: | |
| | | | online; |
| | | | offline; |
| | | | linkfailure; and |
| | | | testing. |
| | | Note: | |
| | | If the link fails, the terminal state should be set to "linkfailure" rather than "offline" to be different from the case that the terminal goes offline actively. After the OLT discovers the abnormal offline state of the terminal, the OLT should detect the link to reflect the terminal state accurately. | |
| Terminal login information | Indicates the terminal login information. | The terminal login information should include login time. | |
| Terminal logout information | Indicates the terminal logout information. | The terminal logout information should include logout time. | |

The test interfaces provided by the OLT management system for the ONT management system through n1 include but not limited to the these test items (similar functions can be provided through n2): carrying out all mechanized loop tests (MLTs); checking whether the optical path at the ONT service network interface (SNI) side works normally; and checking whether the PON function module inside the ONT is normal.

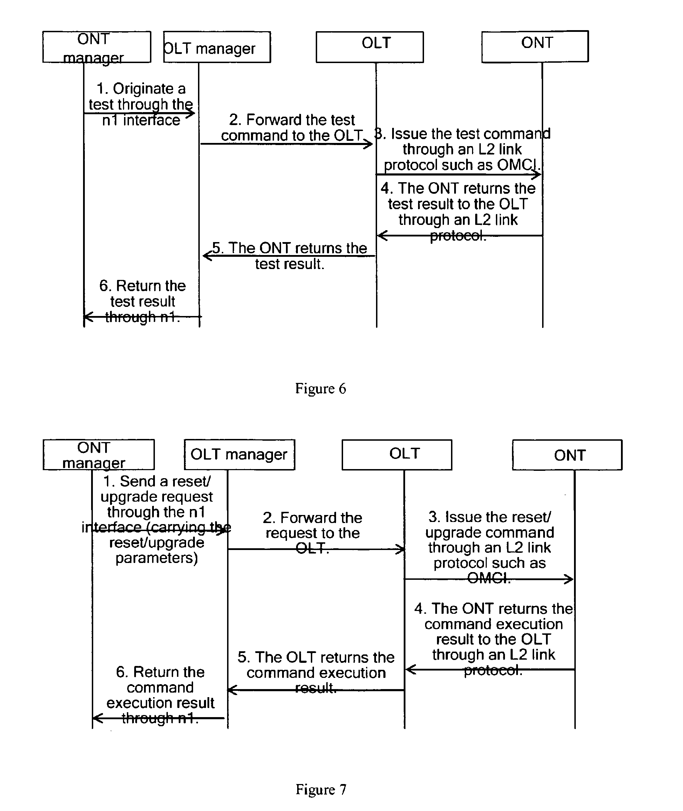

Figure 6 is a flowchart of the ONT manager originating a test on an ONT.
1. The ONT manager sends a test request through n1;
2. After receiving the test request, the OLT manager determines which OLT is connected to the ONT to be tested, and then forwards the test command to the OLT;
3. The OLT issues the test command to the ONT through an L2 link protocol such as OMCI;
4. The ONT returns a test result to the OLT after finishing the test;
5. The OLT returns the test result to the OLT manager;
6. The OLT manager returns the test result to the ONT manager through the n1 interface;

Through the n1/n2 interface, the ONT manager (or other application systems) can reset or upgrade the ONT by using the OLT manager. If the IP path between the ONT and the ONT manager is normal, the ONT manager does not need to reset or upgrade the ONT through this procedure. This procedure is applied more in scenarios where the IP path is disconnected, or the ONT manager is unable to address the ONT through the IP path (for example, the ONT is in a private network but the ONT manager is in a pubic network and cannot access the ONT actively).

Figure 7 shows the process of resetting and upgrading the ONT originated by the ONT manager.
1. The ONT manager sends a reset/upgrade request to the OLT manager through the n1 interface, carrying the reset/upgrade parameters;
2. After receiving the reset/upgrade request, the OLT manager determines which OLT is connected to the ONT to be reset/upgraded, and then forwards the reset/upgrade command to the OLT;
3. The OLT issues the reset/upgrade command to the ONT through an L2 link protocol such as OMCI;
4. The ONT returns the operation result to the OLT after performing the reset/upgrade as instructed;
5. The OLT returns the reset/upgrade result to the OLT manager; and
6. The OLT manager returns the reset/upgrade result to the ONT manager through the n1 interface.

Moreover, in this embodiment of the present invention, an operation support system (OSS) or any other system may manage the PON terminal through the interface provided by the OLT manager. The interface is the same as the n1 interface mentioned above.

In conclusion, the embodiments of the present invention use a PON terminal (ONT) management system and an OLT management system to manage PON terminals concurrently. The PON terminal manager interacts with each PON terminal directly to manage the services in the layers above the link layer; the ONT manager manages PON terminals in the physical layer and the link layer through the functions provided by the OLT management system. The present invention combines the merits of the direct management mode and the indirect management mode through a technical solution based on an L2 link protocol between OLT and ONT, in which (i) the direct management mode can implement differentiated management on PON terminals (of different types and different versions), and the ONT management functions can be extended by only upgrading the NMS without upgrading the OLT; and (ii) the indirect management mode can detect the terminal state accurately and reliably, without performance bottlenecks, and can locate and remove faults when the terminal IP link is faulty, thus realizing efficient remote maintenance and management of terminals.

## Claims

1. A method for managing passive optical network, PON, terminals, ONT, comprising:
managing, by a PON terminal manager (311), information of an IP layer and upper layers over a PON terminal (312) directly; and
managing, by the PON terminal manager (311), information of a link layer and a physical layer over the PON terminal (312) indirectly through an optical line terminal, OLT, manager (321);
**characterized in that**:
the PON terminal manager (311) is configured for managing the PON terminal (312) though a first IP-based interface, the OLT manager (321) is configured for managing an OLT (322) through a second IP-based interface; the PON terminal manager (311) is connected to the OLT manager (321) though a third interface; wherein ONT state monitoring and test functions of the physical layer and the link layer are performed through the third interface between the OLT manager (321) and the PON terminal manager (311).

2. The method of claim 1, wherein the managing information of the IP layer and upper layers over a PON terminal directly, by a PON terminal manager comprises:
initiating, by the PON terminal manager, a request of operation to the PON terminal through an IP-based management protocol, and feeding, by the PON terminal, a result of the operation back in response to the request of operation; or
responding, by the PON terminal manager, to a request of interaction after receiving the request initiated by the PON terminal through an IP-based management protocol.

3. The method of claim 2, wherein the managing, by a PON terminal manager, information for the IP layer and upper layers over a PON terminal directly comprises:
initiating, by the PON terminal manager, a request for configuring information of the IP layer and upper layers over the PON terminal through an IP-based management protocol, and performing, by the PON terminal, the configuration in response to the request, and sending, by the PON terminal, back the configuration result to the PON terminal manager; or
initiating, by the PON terminal manager, a request for state information of the IP layer and upper layers over the PON terminal through an IP-based management protocol, responding, by the PON terminal, to the request and sending back the state information to the PON terminal manager; or
initiating, by the PON terminal manager, a request for resetting or upgrading the PON terminal through an IP-based management protocol, executing, by the PON terminal, reset or upgrade according to the reset/upgrade request and sending back a reset/update result to the PON terminal manager; or
receiving, by the PON terminal manager, a request for reporting by the PON terminal through an IP-based management protocol, and responding, by the PON terminal, to the request and executing the request.

4. The method of claim 1, wherein the managing, by the PON terminal manager, information of a link layer and a physical layer over the PON terminal indirectly through an optical line terminal (OLT) manager comprises:
performing, by the PON terminal manager, a testing, resetting, updating or querying operation on the PON terminal through the OLT manager, by means of a link layer protocol between the OLT managed by the OLT manager and the PON terminal.

5. The method of claim 4, wherein the managing, by the PON terminal manager, information of a link layer and a physical layer over the PON terminal indirectly through an OLT manager comprises:
initiating, by the PON terminal manager, a request for testing the PON terminal to the OLT manager through the third interface between the PON terminal manager and the OLT manager;
sending, by the OLT manager, a test request to the OLT corresponding to the PON terminal through a network management protocol after receiving the request for testing the PON terminal;
issuing, by the OLT, a test command to the PON terminal through the L2 link layer protocol; and
executing, by the PON terminal, the test according to the test command.

6. The method of claim 5, wherein the test is: a mechanized loop test, MLT, a test that verifies whether a function module in the PON terminal is normal, or a test that verifies whether an optical path at a service network interface (SNI) side of the PON terminal is normal.

7. The method of claim 4, wherein the managing, by the PON terminal manager, information of a link layer and a physical layer over the PON terminal indirectly through an OLT manager comprises:
initiating, by the PON terminal manager, a request for resetting or upgrading the PON terminal to the OLT manager through the third interface between the PON terminal manager and the OLT manager;
sending, by the OLT manager, a reset/upgrade request to the OLT corresponding to the PON terminal through a network management protocol after receiving the request for resetting or upgrading the PON terminal;
issuing, by the OLT, a reset/upgrade command to the PON terminal through an L2 link protocol according to the reset/upgrade request; and
executing, by the PON terminal, the reset or upgrade according to the reset/upgrade command.

8. The method of claim 1, wherein the managing, by the PON terminal manager, information of a link layer and a physical layer over the PON terminal indirectly through an OLT manager comprises:
requesting, by the PON terminal manager, the OLT manager for state information of the PON terminal through the third interface between the PON terminal manager and the OLT manager;
sending, by the OLT manager, a request to the OLT after being requested by the PON terminal manager;
sending, by the OLT, back the state information of the PON terminal to the OLT manager according to the request; and
sending, by the OLT manager, back the state information to the PON terminal manager.

9. The method of claim 8, wherein the sending, by the OLT, back the state information of the PON terminal to the OLT manager according to the request comprises:
detecting, by the OLT, a state of the PON terminal through an L2 link protocol, and sending, by the OLT, back the state to the OLT manager; or
receiving by the OLT, PON terminal state information reported by the PON terminal, and sending, by the OLT, the PON terminal state information to the OLT terminal manager.

10. The method of claim 8 or 9, wherein the state information of the PON terminal comprises: a terminal ID, a terminal line ID,a terminal type, an organizationally unique identifier (OUI), terminal login information, and terminal logout information.

11. The method of any of claims 5-9, wherein the interface between the PON terminal manager and the OLT manager supports a derivative of the Extensible Markup Language (XML).

12. A system for managing passive optical network, PON, terminals, ONT, comprising a PON terminal (312), a PON terminal manager (311), an optical line terminal, OLT(322), and an OLT manager (321), wherein:
the PON terminal manager (311) is adapted to manage information in an IP layer and upper layers of the PON terminal (312) directly, and manage information in a link layer and a physical layer of the PON terminal (312) indirectly through the OLT manager (321);
**characterized in that**:
the PON terminal manager (311) is configured for managing the PON terminal (312) though a first IP-based interface, the OLT manager (321) is configured for managing an OLT (322) through a second IP-based interface; the OLT manager (321) provides a third interface for the PON terminal manager (311) to indirectly manage the PON terminal (321) when the OLT (322) interacts with the PON terminal (321); wherein ONT state monitoring and test functions of the physical layer and the link layer are performed through the third interface between the OLT manager (321) and the PON terminal manager (311).

13. The system of claim 12, wherein the PON terminal is an optical network terminal, ONT, or an optical network unit, ONU.

14. The system of claim 12, wherein the PON terminal manager interacts with the OLT manager through a protocol deriving from XML.

## Patentansprüche

1. Verfahren zum Verwalten von Endgeräten, ONT, eines passiven optischen Netzwerks, PON, das die folgenden Schritte aufweist:
direktes Verwalten durch einen PON-Endgerätemanager (311) von Informationen einer IP-Schicht und oberer Schichten über ein PON-Endgerät (312); und
indirektes Verwalten durch den PON-Endgerätemanager (311) von Informationen einer Verbindungsschicht und einer physikalischen Schicht über das PON-Endgerät (312) durch einen Manager (321) für ein optisches Leitungsendgerät, OLT;
**dadurch gekennzeichnet, dass**:
der PON-Endgerätemanager (311) durch eine erste IP-basierte Schnittstelle zum Verwalten des PON-Endgeräts (312) konfiguriert ist, der OLT-Manager (321) durch eine zweite IP-basierte Schnittstelle zum Verwalten eines OLT (322) konfiguriert ist;
der PON-Endgerätemanager (311) mit dem OLT-Manager (321) durch eine dritte Schnittstelle verbunden ist; wobei eine ONT-Statusüberwachung und Testfunktionen der physikalischen Schicht und der Verbindungsschicht durch die dritte Schnittstelle zwischen dem OLT-Manager (321) und dem PON-Endgerätemanager (311) ausgeführt werden.

2. Verfahren nach Anspruch 1, wobei das direkte Verwalten von Informationen der IP-Schicht und oberer Schichten über ein PON-Endgerät durch einen PON-Endgerätemanager Folgendes aufweist:
Veranlassen durch den PON-Endgerätemanager einer Operationsanforderung an das PON-Endgerät durch ein IP-basiertes Verwaltungsprotokoll, und Zurückführen durch das PON-Endgerät eines Resultats der Operation als Reaktion auf die Operationsanforderung; oder
Antworten durch den PON-Endgerätemanager auf eine Kommunikationsanforderung nach dem Empfangen der durch das PON-Endgerät veranlassten Anforderung durch ein IP-basiertes Verwaltungsprotokoll.

3. Verfahren nach Anspruch 2, wobei das direkte Verwalten durch einen PON-Endgerätemanager von Informationen für die IP-Schicht und oberen Schichten über ein PON-Endgerät Folgendes aufweist:
Veranlassen durch den PON-Endgerätemanager einer Anforderung zum Konfigurieren von Informationen der IP-Schicht und der oberen Schichten über das PON-Endgerät durch ein IP-basiertes Verwaltungsprotokoll und Durchführen durch das PON-Endgerät der Konfiguration als Reaktion auf die Anforderung und Zurücksenden durch das PON-Endgerät des Konfigurationsresultats an den PON-Endgerätemanager; oder
Veranlassen durch den PON-Endgerätemanager einer Anforderung nach Statusinformationen der IP-Schicht und der oberen Schichten über das PON-Endgerät durch ein IP-basiertes Verwaltungsprotokoll, Antworten durch das PON-Endgerät auf die Anforderung und Zurücksenden der Statusinformationen an den PON-Endgerätemanager; oder
Veranlassen durch den PON-Endgerätemanager einer Anforderung zum Zurücksetzen oder Aufrüsten des PON-Endgeräts durch ein IP-basiertes Verwaltungsprotokoll,
Ausführen durch das PON-Endgerät des Zurücksetzens oder der Aufrüstung gemäß der Zurücksetzungs-/Aufrüstungsanforderung und Zurücksenden eines Zurücksetzungs-/Aufrüstungsresultats an den PON-Endgerätemanager; oder
Empfangen durch den PON-Endgerätemanager einer Anforderung zum Berichten durch das PON-Endgerät durch ein IP-basiertes Verwaltungsprotokoll und Antworten durch das PON-Endgerät auf die Anforderung und Ausführen der Anforderung.

4. Verfahren nach Anspruch 1, wobei das indirekte Verwalten durch den PON-Endgerätemanager von Informationen einer Verbindungsschicht und einer physikalischen Schicht über das PON-Endgerät durch einen Manager eines optischen Leitungsendgeräts (OLT) Folgendes aufweist:
Durchführen durch den PON-Endgerätemanager einer Prüfungs-, Rücksetz-, Aktualisierungs- oder Abfrageoperation am PON-Endgerät durch den OLT-Manager mittels eines Verbindungsschichtprotokolls zwischen dem durch den OLT-Manager verwalteten OLT und dem PON-Endgerät.

5. Verfahren nach Anspruch 4, wobei das indirekte Verwalten durch den PON-Endgerätemanager von Informationen einer Verbindungsschicht und einer physikalischen Schicht über das PON-Endgerät durch einen OLT-Manager Folgendes aufweist:
Veranlassen durch den PON-Endgerätemanager einer Anforderung zum Testen des PON-Endgeräts an den OLT-Manager durch die dritte Schnittstelle zwischen dem PON-Endgerätemanager und dem OLT-Manager;
Senden durch den OLT-Manager einer Testanforderung an das OLT, das dem PON-Endgerät entspricht, durch ein Netzwerkverwaltungsprotokoll nach dem Empfangen der Anforderung zum Testen des PON-Endgeräts;
Ausgeben durch das OLT eines Testbefehls an das PON-Endgerät durch das L2-Verbindungsschichtprotokoll; und
Ausführen durch das PON-Endgerät des Tests gemäß des Testbefehls.

6. Verfahren nach Anspruch 5, wobei der Test Folgendes ist: ein mechanisierter Schleifentest, MLT, ein Test, der verifiziert, ob ein Funktionsmodul im PON-Endgerät normal ist, oder ein Test, der verifiziert, ob ein optischer Weg auf einer Seite einer Dienstnetzwerkschnittstelle (SNI) des PON-Endgeräts normal ist.

7. Verfahren nach Anspruch 4, wobei das indirekte Verwalten durch den PON-Endgerätemanager von Informationen einer Verbindungsschicht und einer physikalischen Schicht über das PON-Endgerät durch einen OLT-Manager Folgendes aufweist:
Veranlassen durch den PON-Endgerätemanager einer Anforderung zum Zurücksetzen oder Aufrüsten des PON-Endgeräts an den OLT-Manager durch die dritte Schnittstelle zwischen dem PON-Endgerätemanager und dem OLT-Manager;
Senden durch den OLT-Manager einer Zurücksetzungs-/Aufrüstungsanforderung an das OLT, das dem PON-Endgerät entspricht, durch ein Netzwerkverwaltungsprotokoll nach dem Empfangen der Anforderung zum Zurücksetzen oder Aufrüsten des PON-Endgeräts;
Ausgeben durch das OLT eines Zurücksetzungs-/Aufrüstungsbefehls an das PON-Endgerät durch ein L2-Verbindungsprotokoll gemäß der Zurücksetzungs-/Aufrüstungsanforderung; und
Ausführen durch das PON-Endgerät des Zurücksetzens oder der Aufrüstenung gemäß des Zurücksetzungs-/Aufrüstungsbefehls.

8. Verfahren nach Anspruch 1, wobei das indirekte Verwalten durch den PON-Endgerätemanager von Informationen einer Verbindungsschicht und einer physikalischen Schicht über das PON-Endgerät durch einen OLT-Manager Folgendes aufweist:
Anforderungen durch den PON-Endgerätemanager beim OLT-Manager nach Statusinformationen des PON-Endgeräts durch die dritte Schnittstelle zwischen dem PON-Endgerätemanager und dem OLT-Manager;
Senden durch den OLT-Manager einer Anforderung an das OLT, nachdem er durch den PON-Endgerätemanager angefragt worden ist;
Zurücksenden durch das OLT der Statusinformationen des PON-Endgeräts an den OLT-Manager gemäß der Anforderung; und
Zurücksenden durch den OLT-Manager der Statusinformationen an den PON-Endgerätemanager.

9. Verfahren nach Anspruch 8, wobei das Zurücksenden durch den OLT der Statusinformationen des PON-Endgeräts an den OLT-Manager gemäß der Anforderung Folgendes aufweist:
Ermitteln durch das OLT eines Status des PON-Endgeräts durch ein L2-Verbindungsprotokoll und Zurücksenden durch das OLT des Status an den OLT-Manager;
oder
Empfangen durch das OLT von PON-Endgerätestatusinformationen, die durch das PON-Endgerät gemeldet werden, und Senden durch das OLT der PON-Endgerätestatusinformationen an den OLT-Endgerätemanager.

10. Verfahren nach Anspruch 8 oder 9, wobei die Statusinformationen des PON-Endgeräts Folgendes aufweisen: eine Endgeräte-ID, eine Endgeräteleitungs-ID, einen Endgerätetyp, eine eindeutige Herstellerkennung (OUI), Endgeräteeinloginformationen und Endgeräteausloginformationen.

11. Verfahren nach einem der Ansprüche 5-9, wobei die Schnittstelle zwischen dem PON-Endgerätemanager und dem OLT-Manager eine Ableitung der Extensible Markup Language (XML) unterstützt.

12. System zum Verwalten von Endgeräten, ONT, eines passiven optischen Netzwerks, PON, das ein PON-Endgerät (312), einen PON-Endgerätemanager (311), ein optisches Leitungsendgerät, OLT (322) und einen OLT-Manager (321) aufweist, wobei:
der PON-Endgerätemanager (311) eingerichtet ist, Informationen in einer IP-Schicht und oberen Schichten des PON-Endgeräts (312) direkt zu verwalten, und Informationen in einer Verbindungsschicht und einer physikalischen Schicht des PON-Endgeräts (312) indirekt durch den OLT-Manager (321) zu verwalten;
**dadurch gekennzeichnet, dass**:
der PON-Endgerätemanager (311) zum Verwalten des PON-Endgeräts (312) durch eine erste IP-basierte S chnittstelle konfigu riert ist, der OLT-Manager (321) zum Verwalten eines OLT (322) durch eine zweite IP-basierte Schnittstelle konfiguriert ist; der OLT-Manager (321) eine dritte Schnittstelle für den PON-Endgerätemanager (311) bereitstellt, um das PON-Endgerät (321) indirekt zu verwalten, wenn das OLT (322) mit dem PON-Endgerät (321) kommuniziert; wobei eine ONT-Statusüberwachung und Testfunktionen der physikalischen Schicht und der Verbindungsschicht durch die dritte Schnittstelle zwischen dem OLT-Manager (321) und dem PON-Endgerätemanager (311) ausgeführt werden.

13. System nach Anspruch 12, wobei das PON-Endgerät ein optisches Netzwerkendgerät, ONT, oder eine optische Netzwerkeinheit, ONU, ist.

14. System nach Anspruch 12, wobei der PON-Endgerätemanager mit dem OLT-Manager durch ein von XML abgeleitetes Protokoll kommuniziert.

## Revendications

1. Procédé pour gérer des terminaux, ONT, de réseau optique passif, PON, comprenant les étapes suivantes :
gérer, par un gestionnaire de terminal PON (311), des informations d'une couche IP et des couches supérieures sur un terminal PON (312) directement ; et
gérer, par le gestionnaire de terminal PON (311), des informations d'une couche de liaison et d'une couche physique sur le terminal PON (312) indirectement par l'intermédiaire d'un gestionnaire (321) de terminal de ligne optique, OLT;
**caractérisé en ce que** :
le gestionnaire de terminal PON (311) est configuré pour gérer le terminal PON (312) par l'intermédiaire d'une première interface basée sur IP, le gestionnaire OLT (321) est configuré pour gérer un OLT (322) par l'intermédiaire d'une deuxième interface basée sur IP ; le gestionnaire de terminal PON (311) est connecté au gestionnaire OLT (321) par l'intermédiaire d'une troisième interface ; où les fonctions de contrôle et de test de l'état de l'ONT de la couche physique et de la couche de liaison sont exécutées par l'intermédiaire de la troisième interface entre le gestionnaire OLT (321) et le gestionnaire de terminal PON (311).

2. Procédé selon la revendication 1, dans lequel la gestion des informations de la couche IP et des couches supérieures sur un terminal PON directement, par l'intermédiaire d'un gestionnaire de terminal PON, comprend les étapes suivantes :
initier, par l'intermédiaire du gestionnaire de terminal PON, une demande de fonctionnement auprès du terminal PON via un protocole de gestion basé sur IP, et
restituer, par l'intermédiaire du terminal PON, un résultat du fonctionnement en réponse à la demande de fonctionnement ; ou
répondre, par l'intermédiaire du gestionnaire de terminal PON, à une demande d'interaction après réception de la demande initiée par le terminal PON via un protocole de gestion basé sur IP.

3. Procédé selon la revendication 2, dans lequel la gestion, par un gestionnaire de terminal PON, des informations pour la couche IP et les couches supérieures sur un terminal PON directement comprend les étapes suivantes :
initier, par l'intermédiaire du gestionnaire de terminal PON, une demande pour configurer des informations de la couche IP et des couches supérieures sur le terminal PON via un protocole de gestion basé sur IP, et exécuter, par l'intermédiaire du terminal PON, la configuration en réponse à la demande, et retourner, par l'intermédiaire du terminal PON, le résultat de configuration au gestionnaire de terminal PON ; ou
initier, par l'intermédiaire du gestionnaire de terminal PON, une demande d'informations d'état de la couche IP et des couches supérieures sur le terminal PON via un protocole de gestion basé sur IP, répondre, par l'intermédiaire du terminal PON, à la demande, et retourner les informations d'état au gestionnaire de terminal PON ; ou
initier, par l'intermédiaire du gestionnaire de terminal PON, une demande pour réinitialiser ou remettre à niveau le terminal PON via un protocole de gestion basé sur IP, exécuter, par l'intermédiaire du terminal PON, les réinitialisations ou les remises à niveau selon la demande de réinitialisation/remise à niveau et retourner un résultat de réinitialisation/remise à niveau au gestionnaire de terminal PON ; ou
recevoir, par l'intermédiaire du gestionnaire de terminal PON, une demande pour rendre compte par l'intermédiaire du terminal PON via un protocole de gestion basé sur IP, et répondre, par l'intermédiaire du terminal PON, à la demande, et exécuter la demande.

4. Procédé selon la revendication 1, dans lequel la gestion, par le gestionnaire de terminal PON, des informations d'une couche de liaison et d'une couche physique sur le terminal PON indirectement via un gestionnaire de terminal de ligne optique (OLT) comprend les étapes suivantes :
exécuter, par l'intermédiaire du gestionnaire de terminal PON, une opération de test,
de réinitialisation, de mise à jour ou de demande sur le terminal PON via le gestionnaire OLT, au moyen d'un protocole de couche de liaison entre l'OLT géré par le gestionnaire OLT et le terminal PON.

5. Procédé selon la revendication 4, dans lequel la gestion, par l'intermédiaire du gestionnaire de terminal PON, des informations d'une couche de liaison et d'une couche physique sur le terminal PON indirectement via un gestionnaire OLT comprend les étapes suivantes :
initier, par l'intermédiaire du gestionnaire de terminal PON, une demande pour tester le terminal PON auprès du gestionnaire OLT via la troisième interface entre le gestionnaire de terminal PON et le gestionnaire OLT ;
envoyer, par l'intermédiaire du gestionnaire OLT, une demande de test à l'OLT correspondant au terminal PON via un protocole de gestion de réseau après réception de la demande pour tester le terminal PON ;
émettre, par l'intermédiaire de l'OLT, une commande de test auprès du terminal PON via le protocole de couche de liaison L2 ; et
exécuter, par l'intermédiaire du terminal PON, le test selon la commande de test.

6. Procédé selon la revendication 5, dans lequel le test est : un test boucle mécanisé, MLT, un test qui vérifie si un module de fonction dans le terminal PON est normal, ou un test qui vérifie si un trajet optique au niveau d'un côté de l'interface de réseau de service (SNI) du terminal PON est normal.

7. Procédé selon la revendication 4, dans lequel la gestion, par l'intermédiaire du gestionnaire de terminal PON, des informations d'une couche de liaison et d'une couche physique sur le terminal PON indirectement via un gestionnaire OLT comprend les étapes suivantes :
initier, par l'intermédiaire du gestionnaire de terminal PON, une demande pour réinitialiser ou remettre à niveau le terminal PON auprès du gestionnaire OLT via la troisième interface entre le gestionnaire de terminal PON et le gestionnaire OLT ;
envoyer, par l'intermédiaire du gestionnaire OLT, une demande de réinitialisation/remise à niveau à l'OLT correspondant au terminal PON via un protocole de gestion de réseau après réception de la demande pour réinitialiser ou
remettre à niveau le terminal PON ;
émettre, par l'intermédiaire de l'OLT, une commande de réinitialisation/remise à niveau auprès du terminal PON via un protocole de liaison L2 selon la demande de réinitialisation/remise à niveau ; et
exécuter, par l'intermédiaire du terminal PON, la réinitialisation ou la remise à niveau selon la commande de réinitialisation/remise à niveau.

8. Procédé selon la revendication 1, dans lequel la gestion, par l'intermédiaire du gestionnaire de terminal PON, des informations d'une couche de liaison et d'une couche physique sur le terminal PON indirectement via un gestionnaire OLT comprend les étapes suivantes :
demander, par l'intermédiaire du gestionnaire de terminal PON, au gestionnaire OLT des informations d'état du terminal PON via la troisième interface entre le gestionnaire de terminal PON et le gestionnaire OLT ;
envoyer, par l'intermédiaire du gestionnaire OLT, une demande à l'OLT après sollicitation du gestionnaire de terminal PON ;
retourner, par l'intermédiaire de l'OLT, les informations d'état du terminal PON au gestionnaire OLT selon la demande ; et
retourner, par l'intermédiaire du gestionnaire OLT, les informations d'état au gestionnaire de terminal PON.

9. Procédé selon la revendication 8, dans lequel le retour, par l'intermédiaire de l'OLT, des informations d'état du terminal PON au gestionnaire OLT selon la demande comprend les étapes suivantes :
détecter, par l'intermédiaire de l'OLT, un état du terminal PON via un protocole de liaison L2, et retourner, par l'intermédiaire de l'OLT, l'état au gestionnaire OLT ; ou
recevoir par l'intermédiaire de l'OLT, des informations d'état de terminal PON restituées par le terminal PON, et envoyer, par l'intermédiaire de l'OLT, les informations d'état du terminal PON au gestionnaire de terminal OLT.

10. Procédé selon la revendication 8 ou 9, dans lequel les informations d'état du terminal PON comprennent : un identifiant de terminal, un identifiant de ligne de terminal, un type de terminal, un identifiant unique organisationnel (OUI), des informations de connexion de terminal, et des informations de déconnexion de terminal.

11. Procédé selon l'une quelconque des revendications 5 à 9, dans lequel l'interface entre le gestionnaire de terminal PON et le gestionnaire OLT supporte un dérivé du Langage de Balisage Extensible (XML).

12. Système pour gérer des terminaux, ONT, de réseau optique passif, PON, comprenant un terminal PON (312), un gestionnaire de terminal PON (311), un terminal de ligne optique, OLT (322), et un gestionnaire OLT (321), dans lequel :
le gestionnaire de terminal PON (311) est conçu pour gérer des informations dans une couche IP et des couches supérieures du terminal PON (312) directement, et
gérer des informations dans une couche de liaison et une couche physique du terminal PON (312) indirectement via le gestionnaire OLT (321);
**caractérisé en ce que** :
le gestionnaire de terminal PON (311) est configuré pour gérer le terminal PON (312) via une première interface basée sur IP, le gestionnaire OLT (321) est configuré pour gérer un OLT (322) via une deuxième interface basée sur IP ; le gestionnaire OLT (321) fournit une troisième interface pour permettre au gestionnaire de terminal PON (311) de gérer indirectement le terminal PON (321) quand l'OLT (322) interagit avec le terminal PON (321) ; où les fonctions de test et
de contrôle de l'état de l'ONT de la couche physique et de la couche de liaison sont exécutées via la troisième interface entre le gestionnaire OLT (321) et le gestionnaire de terminal PON (311).

13. Système selon la revendication 12, dans lequel le terminal PON est un terminal de réseau optique, ONT, ou une unité de réseau optique, ONU.

14. Système selon la revendication 12, dans lequel le gestionnaire de terminal PON interagit avec le gestionnaire OLT via un protocole dérivé du XML.
